# EUROPEAN PATENT APPLICATION

(11) **EP 2 806 407 A1**
(43) Date of publication of application: **26.11.2014**
(21) Application number: 14169897.7
(22) Date of filing: 26.05.2014
(51) Int. Cl.: G07C 11/00, G06Q 10/06, G06Q 10/02

(54) **Electronic system for management of queues**

(30) Priority: 24.05.2013 CL 20131488
(71) Applicant: Salas Fehlandt, Eduardo Manuel, Santiago (CL)
(72) Inventor: Salas Fehlandt, Eduardo Manuel, Santiago (CL)
(74) Representative: Carpintero Lopez, Francisco

(57) **Abstract**

An online information system for smart phones, PC or other electronic devices, for the counting of the turn number in rows, which enhances waiting time of the users and is of massive use. It consists of a row counter located at the customer service centers, with tickets for attention provided by a ticket dispenser, a server, a mobile device in the hands of the users, a software that is loaded on the server, an application that is loaded on the mobile device from the internet or other sources and wireless transmission media from and to the mobile devices and the server.

## Description

### FIELD OF THE INVENTION

The proposed invention is contained in the field of solutions to management of queues, and it specifically describes and electronic system for management and especially for measurement and periodic delivery of the information about waiting time in queues to the users, i.e., people waiting their turn to be attended.

### BRIEF DESCRIPTION OF THE STATE OF KNOWLEDGE IN THE ART

In the state of the art there are some patents that mention the subject of the electronic arrangement of queues, for example the North American patent US 5978770 which describes a system and method to assign and manage people's reservations of one or more attractions required by personal communication devices.

The reservation requirements are transmitted to a computer associated to the selected attraction, and this computer defines a proposed reservation time, based in the information related to the attraction, previously booked reservations that are keep in a virtual queue and in the actual state of the physical queue associated to the attraction. The waiting time for reservation is transmitted to personal communication devices to its approval or rejection. The confirmed reservations are included in the virtual queue. The users are notified when their reservation's time is approaching.

Another request related to the subject is US 2008/0080445 which describes a system and a method for making reservations to obtain access to resources such us attractions, tours, shows or events like the ones that can be found in an amusement park. It uses a mobile device to calculate the waiting time for the user to access to the resource based in reservation inquiries, without the need of a system or a station or permanent communication with a central data base that contains the information of all reservations and waiting times in queues.

Also US2010/0277276 can be mentioned, this request describes a system to regulate the access of multiple users. The system includes a variety of portable access keys, provided to the system users, that have a parameter associated of access variable; an access gate, that has an open access allowing access and closed access rejecting access; and defining an access queue; a sensor that determines an access feature related with the number of users in the access queue; a controller who assigns an access criterion based in a characteristic of the access queue; and a detector located in the access gate and determines the variable access parameter of a portable access key when is located in the vicinity of the detector. The controller sets the gate in the open position if the access parameter determined by the detector satisfies the access criterion.

None of the documents of the prior art cited utilizes the users cell phones, in the three cases exposed is the branch/company who provides wireless devices to access to the virtual queue, and none them uses the concept of wireless acquisition of a queue number. The use of a device so massive such as the cell phone provides advantages in the maintenance of the equipment as well in the possibility that the proposed system will be of massive use and will benefit to a larger amount of people, resulting in a better use of the waiting spaces y allowing user to perform other activities while the queue is moving and are waiting to be attended.

### SUMMARY OF THE INVENTION

A system that delivers online information for smart phones, personal computers or other electronic devices, of the counting of the turn number in the waiting list, specifically, it focuses in a device that by means of internet, cellular web or another electronic data transfer form delivers information of the waiting number that appears in the counter together with the estimated time of attention.

The system is intended to supermarkets, grocery stores, banks, payment centers, companies customer support, registry office, among others and is especially advantageous for a person that has take a number from that system, because is it possible to be far away from the place of attention and he/she will be continuously monitoring the status of his/her position in the queue, additionally the person will be informed when his/her turn is approaching. In this way, the person can perform other activities while his/her turn in the queue is moving.

### BRIEF DESCRIPTION OF THE FIGURES.

Figure 1 shows the physical counter located at the customer support place with an identifier code.
Figure 2 shows the display with the options to identify the queue.

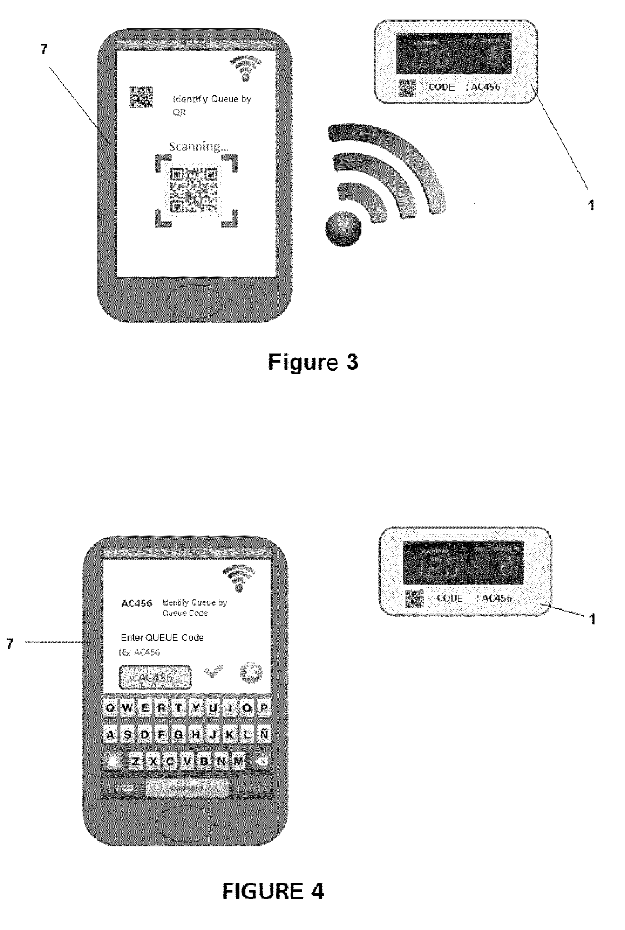

Figure 3 shows how the system can scan de quick-response code that is located in the counter.
Figure 4 shows how to manually entering the identifier number in the system.

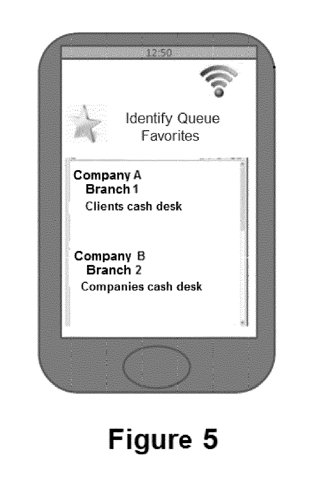

Figure 5 shows the list of queues that a user select as favorites in his/her personal device.
Figure 6 shows the list of historic queues and shows in chronological order the last five queues used.
Figure 7 shows the find files format, the user must enter country, city, company, branch and queue in which he/her wants to participate.
Figure 8 shows the display to choose the option to get a physical number or to schedule an appointment using the electronic device.
Figure 9 shows the display after entering the Physical option, to enter the waiting number that is provided from a paper ticket.
Figure 10 shows the data entry screen in the Schedule mode, to enter the estimated time in which the user wants to be attended
Figure 11 shows the screen with the report of the queue's state.
Figure 12 shows when the system informs that no signal has been received during a period of time, highlighting in red the time of the last update.
Figure 13 shows the system components.

### DETAILED DESCRIPTION OF THE PRESENT INVENTION

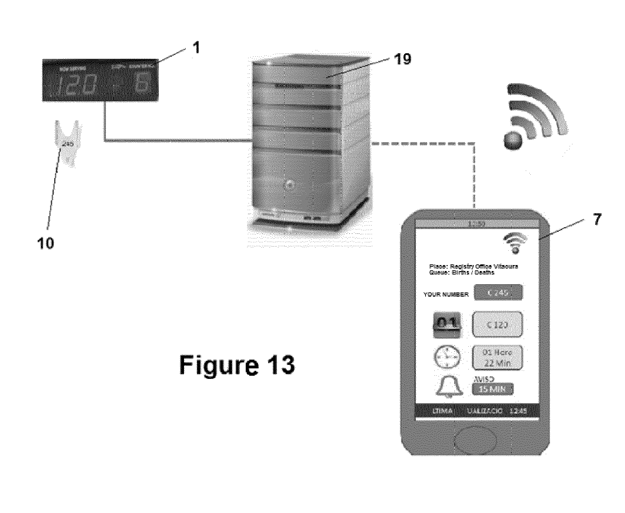

The system works as illustrated in figure 13 using the following elements:
- a queue counter located in the customer/service place (1)
- tickets from a vending machine for customer attention (10)
- A server (19)
- A mobile device in hands of the users (7)
- An application that is loaded in a mobile device from internet or another physical or wireless resource.
- A software that is installed in the server
- Wireless or plugged transmission devices

The physical counter (1) is connected by cables or wirelessly to the server (19), where the database is collect, the application services are executed and the backups are stored, additionally the physical counter (1) has a unique code that identifies it, which is also in rapid-response format and when both codes have the purpose to identify the queue that the uer wants to choose directly with his/her mobile device.

The mobile devices (7) that are wirelessly connected to the server (19) receive and send information to and from the server (19) using the application that has by downloaded by internet or other resource. The server's software allows managing the information received from mobile devices and the physical counter (1) and executing the estimated calculations of the waiting times for customer attention.

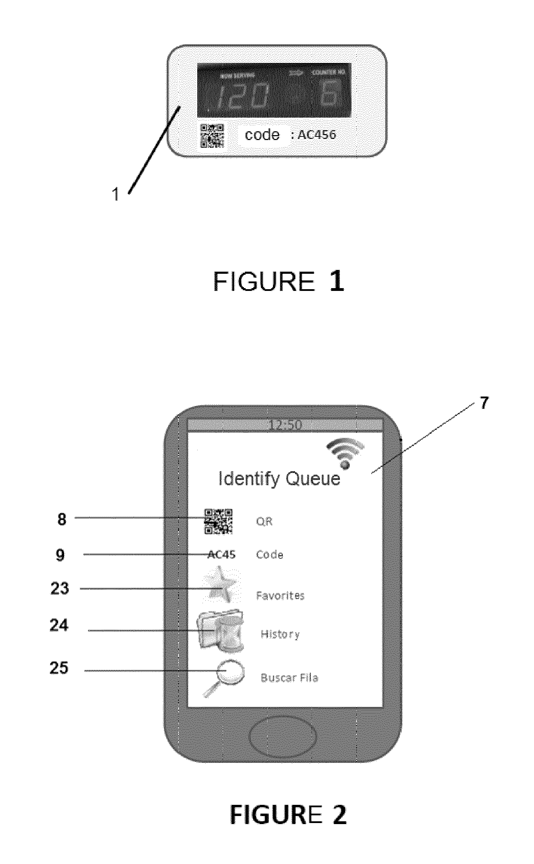

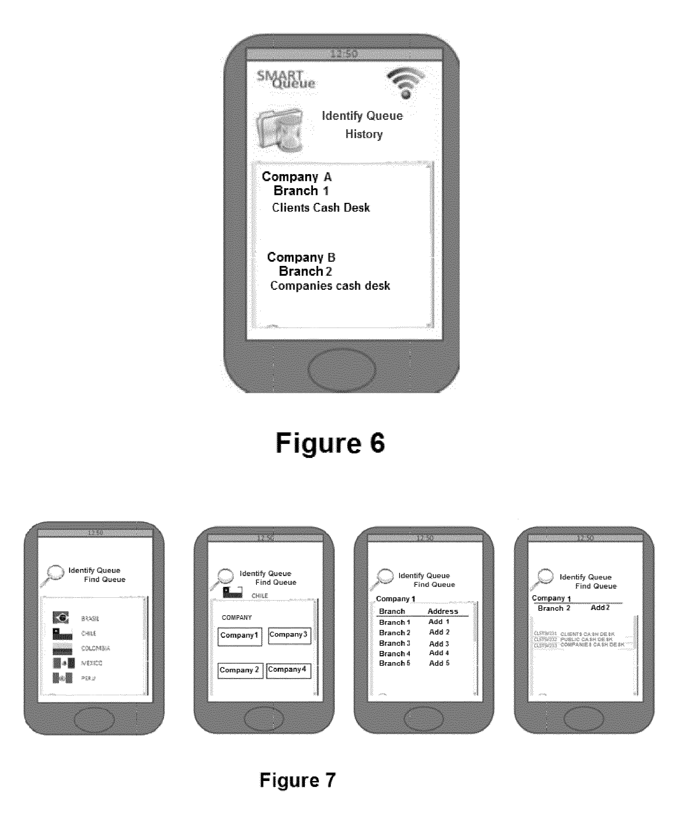

When the application is loaded in a mobile device (7), it starts with an first display to identify the queue in which the user wants to participate (figure 2), this display has five options: Quick-response code that can be a QR (8); enter code (9). These 2 options only can be done in person, the other options Favorites(23), History (24) and Find Queue (25) can be performed remotely. The Quick-response code function (8) allows the user to enter the queue's identifier number using the quick response code. The function Code (9) allows to manually entering the queue's identifier by the alphanumeric code. In the case of Favorites (23), a list of the queues that has been used in the past and has been selected with the option "save in favorites" is displayed. This list can be managed adding or deleting queues. In the option History (24), the last 5 queues used appear in a chronological order and finally the Find Queue option (25) enters to a system to find a desired queue, from country to city, company, etc (figure 7).

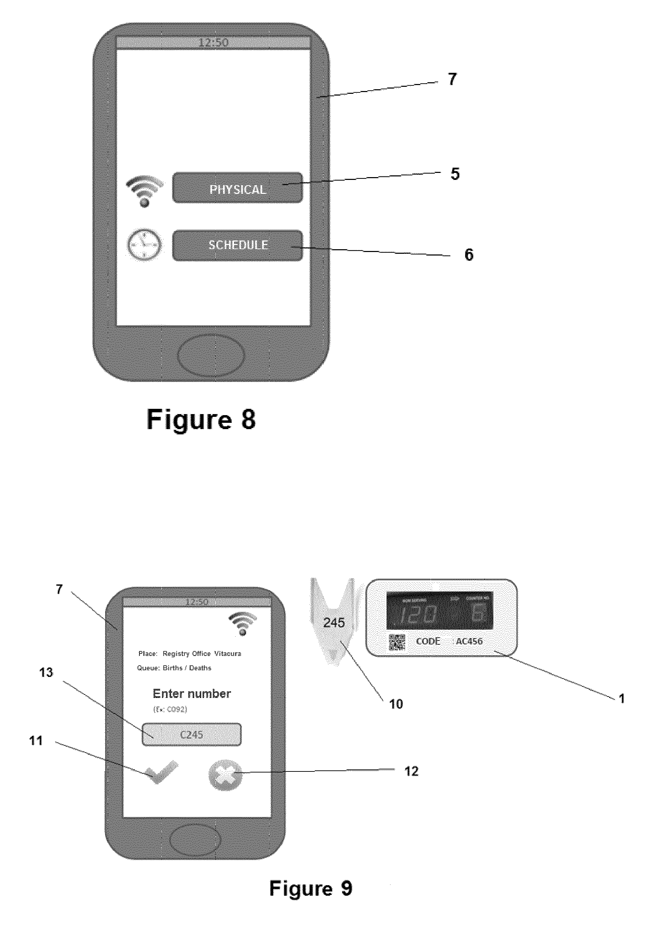

Once the queue is selected it continues to the waiting options (figure 8) which are Physical (5) or Schedule (6) options. By selecting the Physical (5) option, a display is shown (figure 9) when the systems ask to manually enter the ticket (10) number that has been previously taken by the user.

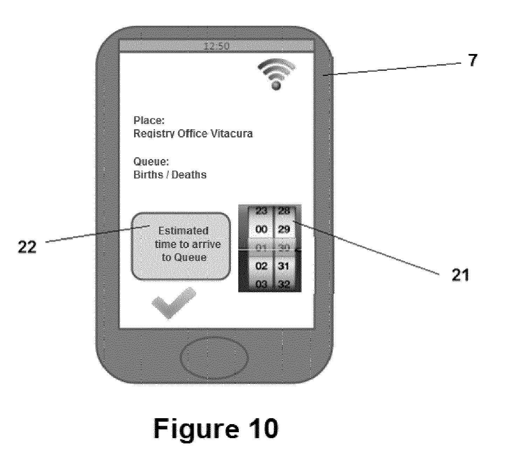

For the option Schedule (6), a screen is displayed (figure 10) when the desired time of attention can be entered in a special window (21).

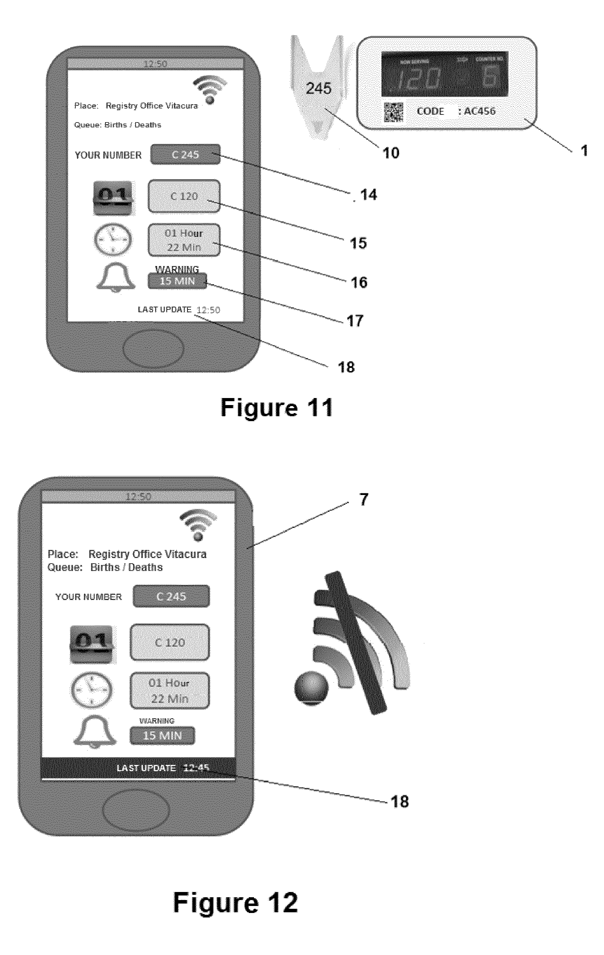

For both options Physical or Schedule, once completed the data the system informs to the user about the state of the queue using display warnings (figure 11) that are visualized in the user's mobile device (7), the number entered or assigned (14), the queue the number of the queue that is currently being attended (15), the estimated time of attention (16) for the number assigned in the queue entered or assigned (14), the previous time (17) that informs or notify about the time remaining to be attended, and the time at which the last update was made (18). The system warns that have not received any signal during a specific period of time, highlighting in red the time of the last update (fig 12).

Additionally, the present invention considers a method that consists in the following:
a) Provide:
   - A queue counter located in the place of attention/support;
   - A vending machine to supply tickets to customers;
   - A server;
   - A mobile device in hands of the user/customer;
   - A software that is loaded in the server;
   - An application that is downloaded in the mobile device from internet or other related resource; and
   - resources for wireless stream from and to the mobile devices and the server.
b) Install the software in the server
c) The user loads the application from internet
d) The user loads from the counter the queue that he wants to participate in his/her mobile device, using a quick-response code or directly entering the alphanumeric code or selecting a queue from the Favorites or History options, or find a queue using the Find option.
e) The user chooses in the application "Physical" mode to immediately access to the queue order or "Schedule" to access in a specific time determined by the user to this queue.
f) If the user selects to load in the "Physical" option to access to an applying queue
g) the user loads the number of attention in the application
h) If the user selects to load in the "Schedule" option to access to an applying queue
i)the user loads in the "Schedule" mode the approximated time to arrive to the queue

## Claims

1. A system of online information for Smart Phones, PC or other electronic devices, of the counting of the turn number in queues that improves the waiting time of the users and it is of massive use **CHARACTERIZED IN THAT** is composed by:
- a queue counter located in the place of attention/support;
- tickets from a vending machine for attention/support;
- A server;
- A mobile device in hands of the user;
- A software that is loaded in the server
- An application that is loaded in the mobile device from internet or other resource; and
- Resources for wireless stream from and to the mobile devices and the server.

2. The system of online information from claim 1 **CHARACTERIZED IN THAT** the queues physical counter has a quick-response code that can be QR, which allows identifying the queue that the user selects directly with the mobile device.

3. The online information system from claim 1 **CHARACTERIZED IN THAT** the database is compiled in the server, the application services are executed and a backup of the queue data is saved.

4. The online information system from claim 1 **CHARACTERIZED IN THAT** the software in the server manages information from mobile devices and the counter

5. The online information system from claim 1 **CHARACTERIZED IN THAT** the software of the server performs the estimated calculations of the waiting time of the user.

6. The online information system from claim 1 **CHARACTERIZED IN THAT** the server receives information from mobile devices and from the queue counter.

7. The online information system from claim 1 **CHARACTERIZED IN THAT** the application is load in the mobile device from internet or another wireless or plugged resource.

8. The online information system from claim 1 **CHARACTERIZED IN THAT** the application:
- has a function in which the user arrives to the queue and enters the queue identification number, that can be a quick-response code that can be QR; or directly entering the alphanumeric code; or selecting from the favorites list previously determined; or the history list; or using the system's find option for queues.
- (has a display in which the progress of the quick-response code acquisition that can be QR, is shown.)
- has a display in which the attention code is entered in a specific window for that purpose and it has an accept button and a reject button to accept and reject, respectively the number entered in the window.
- It has a display in which the user favorite's queues are shown, to be selected in order to participle again in the future.
- It has a display in which the last five queues used by the user are shown as history, to be selected in order to participle again in the future.
- It has multiple displays to find the queue of interest, starting from the country, city, company, etc.
- Assigns a number of attention in a physical form, taking a ticket
- Assigns a turn is a schedule form, entering an estimated time to be attended that is manually entered in the mobile device.
- It has a notify display in which the user is advised in his/her mobile device about the number of turn assigned or entered in the queue, the number that is currently being attended, the estimated waiting time for the counting number entered, the previous time that the system will take to notify that the turn of attention is imminent, a warning of the time of the last update and a warning that states that no signal has been received in a period of time, highlighting in red the time of the last update.

9. A method to use an online information system for Smart Phones, PC or other electronic devices, of the counting of the turn number in the queue that saves time to the users **CHARACTERIZED IN THAT** is composed by:
a) Provide:
- A queue counter located in the place of attention/support;
- A vending machine to supply tickets to customers;
- A server;
- A mobile device in hands of the user/customer;
- A software that is loaded in the server;
- An application that is downloaded in the mobile device from internet or other related resource; and
- resources for wireless stream from and to the mobile devices and the server.
b) Install the software in the server
c) The user loads the application from internet
d) The user loads from the counter the queue that he wants to participate in his/her mobile device, using a quick-response code or directly entering the alphanumeric code or selecting a queue from the Favorites or History options, or find a queue using the Find option.
e) The user chooses in the application "Physical" mode to immediately access to the queue order or "Schedule" to access in a specific time determined by the user to this queue.
f) If the user selects to load in the "Physical" option to access to an applying queue
g) the user loads the number of attention in the application
h) If the user selects to load in the "Schedule" option to access to an applying queue
i) the user loads in the "Schedule" mode the approximated time to arrive to the queue
j) In both "Physical" and "Schedule" options, after entering the data requested by the system, the mobile device displays the turn attention number, the number that is currently being attended, the previous of warning to be attended and the time **in that** the system made the last update.
